# EUROPEAN PATENT APPLICATION

(11) **EP 3 197 148 A1**
(43) Date of publication of application: **26.07.2017**
(21) Application number: 17151389.8
(22) Date of filing: 13.01.2017
(51) Int. Cl.: H04N 5/232, G05D 1/00

(54) **METHOD FOR CONTROLLING MOTIONS AND ACTIONS OF AN APPARATUS INCLUDING AN IMAGE CAPTURE DEVICE**

(30) Priority: 22.01.2016 US 201662281810 P; 30.12.2016 US 201615395407
(71) Applicant: MediaTek Inc., Hsin-Chu 300 (TW)
(72) Inventor: Liao, Cheng-Yu, 300 Hsinchu City (TW); Chan, Cheng-Che, 302 Hsinchu County (TW); Chen, Cheng-Che, 220 New Taipei City (TW)
(74) Representative: Wright, Howard Hugh Burnby

(57) **Abstract**

Method for controlling motions and actions of an apparatus including an image capture device having a moving device connected thereto using a controlling device is provided, wherein the moving device is capable of moving the image capture device. The method includes: displaying preview image provided by the image capture device on a display device of the controlling device; detecting inputs to alter the preview image from an input device of the controlling device; obtaining a first image to be captured based on the detected inputs; generating one or more first control commands according to the first image; and transmitting the one or more first control commands to the apparatus via a communication link to control motions and actions of the image capture device and the moving device to capture a second image to be returned, which is the same as the first image, to the controlling device.

## Description

### Field of the Disclosure

The disclosure relates to image capturing and processing, and, in particular, to a controlling system and method for controlling motions and actions of an apparatus including an image capture device having a moving device connected thereto using a controlling device.

### Description of the Related Art

In recent years, portable devices, such as mobile or handheld devices, have become more and more technologically advanced and versate. For example, the mobile device can receive e-mail messages, its phone book has an advanced management application that allows multimedia playback, and it has a variety of other functions. As these devices have the convenience of versatility, versatile, these devices are indispensable in life.

With the development of computer technology, selfie devices which are devices providing a selfie function have been increasing. Through the selfie, an operator can self-photograph his face etc. by extending his arm holding the imaging apparatus, such as a hand-held digital camera or smart phone. When the selfie function is enabled, the operator becomes an object, and a scene of an operator's performance is photographed in front of the imaging apparatus.

Composition is the main factor in creating a good selfie image. However, some drawbacks of current selfie devices can be found. For example, some current selfie devices may have limited field of view (FOV) such that it is hard to include a group of people in a photo or to obtain the desired background using the imaging apparatus. When a selfie stick or tripod is used in self-photographing, the imaging apparatus is set and the operator may be at a position where he cannot reach the imaging apparatus. In such case, it may be hard to check a preview image being photographed and the composition of the photo is limited.

Moreover, some flying objects with a camera, such as a drone, may be used as imaging apparatuses to perform image capture or photography. The operator may control the flying object to create a good image with a proper image composition. To do this, the operator may need skills for device operation to pilot the flying object to change the image composition manually. However, this is often beyond either the skill level of the operator, or requires too much time and effort to be practical.

Accordingly, there is demand for a controlling system and an associated method for easily determining the image composition to solve the aforementioned problem.

### BRIEF SUMMARY OF THE DISCLOSURE

A detailed description is given in the following implementations with reference to the accompanying drawings.

In an exemplary implementation, a method for controlling motions and actions of an apparatus including an image capture device having a moving device connected thereto using a controlling device is provided, wherein the moving device is capable of moving the image capture device, the method comprising: displaying a preview image provided by the image capture device on a display device of the controlling device; detecting inputs to alter the preview image from an input device of the controlling device; obtaining a first image to be captured based on the detected inputs, wherein the first image is associated with a first image composition; generating one or more first control commands according to the first image; and transmitting the one or more first control commands to the apparatus via a communication link to control motions and actions of the image capture device and the moving device to capture a second image to be returned to the controlling device; wherein the second image returned is the same as the first image.

It is preferred that the communication link comprises wired and wireless communication links. Furthermore, the controlling device maybe a mobile device, and the apparatus maybe a drone. Alternatively, the controlling device is a mobile device, the image capture device is a camera of the mobile device and the moving device is an optical lens module of the camera of the mobile device.

In another exemplary implementation, a controlling system is provided. The controlling system comprises: an apparatus including an image capture device having a moving device connected thereto, wherein the moving device is capable of moving the image capture device that captures images; and a controlling device coupled to the apparatus via a communication link for controlling motions and actions of the image capture device and the moving device in the apparatus, wherein the controlling device is configured to display a preview image provided by the image capture device on a display device of the controlling device, detect inputs to alter the preview image from an input device of the controlling device, obtain a first image to be captured based on the detected inputs, generate one or more first control commands according to the first image, and transmit the one or more first control commands to the apparatus via the communication link to control the image capture device and the moving device to capture a second image to be returned to the controlling device; wherein the first image is associated with the altered preview image and the second image returned is the same as the first image.

Other aspects and features of the present application will become apparent to those with ordinarily skill in the art upon review of the following descriptions of specific embodiments of the controlling systems and the methods for controlling motions and actions of an apparatus including an image capture device having a moving device connected thereto using a controlling device.

### BRIEF DESCRIPTION OF THE DRAWINGS

The disclosure can be more fully understood by reading the subsequent detailed description and examples with references made to the accompanying drawings, wherein:
Fig. 1 is a block diagram of a controlling system according to an embodiment of the application;
Fig. 2 is a flow chart of a method for controlling motions and actions of an apparatus using a controlling device according to an embodiment of the application;
Figs. 3A to 3D are schematic diagrams illustrating an embodiment of an example of an operation for altering the preview image on the user interface and related motion and action control of the image capture device and the moving device within the apparatus of the application;
Fig. 4 is a flow chart of a method for controlling motions and actions of an apparatus using a controlling device according to another embodiment of the application;
Figs. 5A and 5B are schematic diagrams illustrating an embodiment of an example of calculating moving distance and action needed of the application;
Fig. 6A is a schematic diagram illustrating an embodiment of an example of an operation for improving the transmission delay of the application; and
Fig. 6B is a schematic diagram illustrating another embodiment of an example of an operation for improving the transmission delay of the application..

### DETAILED DESCRIPTION OF THE DISCLOSURE

The following description is made for the purpose of illustrating the general principles of the application and should not be taken in a limiting sense. It should be understood that the embodiments may be realized in software, hardware, firmware, or any combination thereof.

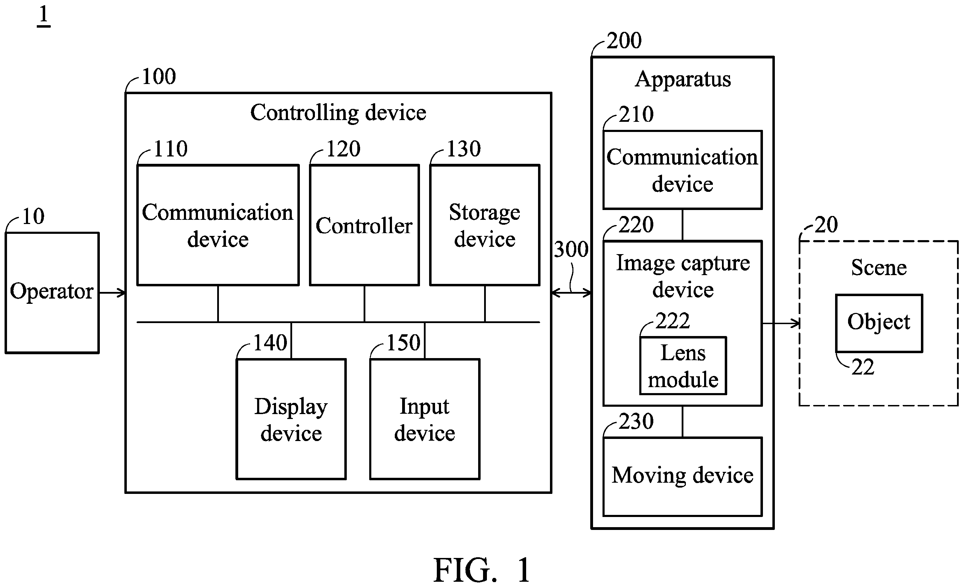

Fig. 1 is a block diagram of a controlling system according to an embodiment of the application. The controlling system 1 comprises a controlling device 100 and an apparatus 200, wherein the controlling device 100 is coupled to the apparatus 200 via a communication link 300 for controlling the apparatus 200. To be more specific, the controlling device 100 is configured to control motions and actions of the image capture device and the moving device in the apparatus 200. The communication link 300 may be wired or wireless communication link, such as such as Wi-Fi (such as IEEE 802.11a/b/g/n), Bluetooth, Wi-MAX communication and so on. In an exemplary embodiment, the electronic device 100 may be a personal computer or portable device such as mobile phone, tablet, digital camera/camcorder, game console or any suitable device capable of performing the method of the present application.

The controlling device 100 comprises a communication device 110, a controller 120, a storage device 130, a display device 140, and an input device 150. The communication device 100 is configured to perform wired or wireless transmission and reception to and from a wired or wireless network. To be more specific, the communication device 110 may further comprise a RF circuitry (not shown). The RF circuitry may be coupled to one or more antennas (not shown) and may allow communications with one or more additional devices, computers and/or servers via a wireless network. The controlling device 100 may support various communications protocols, such as the code division multiple access (CDMA), Global System for Mobile Communications (GSM), Enhanced Data GSM Environment (EDGE), High-Speed Downlink Packet Access (HSDPA), Wi-Fi (such as IEEE 802.11 a/b/g/n), Bluetooth, and Wi-MAX communication protocol, and a protocol for emails, instant messaging (IM), and/or a short message services (SMS), but the application is not limited thereto.

The controller 120 may be a general-purpose processor, a Micro Control Unit (MCU), an application processor, a Digital Signal Processor (DSP), or the like, for controlling the communication device 110 for communications with the apparatus 200, storing data to and retrieving data from the storage device 130, sending a series of frame data (e.g. representing text messages, graphics, images, etc.) to the display device 140, receiving signals from the input device 150. In particular, the controller 120 coordinates the aforementioned operations of the communication device 110, the storage device 130, the display device 140, and the input device 150 for performing the method of the present application.

The storage device 130 may be a memory, such as a FLASH memory or a Non-Volatile Random Access Memory (NVRAM), or a magnetic storage device, such as a hard disk or a magnetic tape, or an optical disc, or any combination thereof for storing instructions and/or program code of applications, communication protocols, and/or the method of the present application. For example, the program codes of an algorithm for transferring motion and action of the image capture device and/or the moving device from photo composition preference input by the operator to generate the control commands can be pre-stored in the storage device 130. The controller 120 may load program codes of the algorithm from the storage device 130, and execute the program code of the algorithm for control command generation.

The display device 140 may be a Liquid-Crystal Display (LCD), Light-Emitting Diode (LED) display, or Electronic Paper Display (EPD), etc., for providing a display function. Alternatively, the display device 140 may further comprise one or more touch sensors disposed thereon or thereunder for sensing touches, contacts, or approximations of objects, such as fingers or styluses.

The input device 150 may comprise one or more buttons, a keyboard, a mouse, a touch pad, a microphone, and/or a speaker, etc., serving as the Man-Machine Interface (MMI) for interaction with users. In an exemplary embodiment, the input device 150 may be a touch pad, a touch-sensitive screen, a non-touch 3D interactive system or an eye-tracking system, and the application is not limited thereto.

When the display device 140 is a touch-sensitive screen, it may detect contact and any movement or break thereof by using any of a plurality of touch sensitivity technologies now known or to be later developed, including, but not limited to, capacitive, resistive, infrared, and surface acoustic wave touch sensitivity technologies, as well as other proximity sensor arrays or other elements for determining one or more points of contact with the touch-sensitive screen. However, the touch-sensitive screen may also display visual output of the controlling device 100.

The display device 140 may further provide a user interface for interaction with an operator 10 so that the operator 10 may input commands or actions via the user interface. The operator 10 can be a human or a machine that has the ability to determine an image composition of a preview image, for example.

The apparatus 200 further comprises a communication device 210, an image capture device 220 and a moving device 230, wherein the image capture device 220 is equipped with image capturing function to capture still images or video images, the communication device 210 is configured to communicate with the controlling device 110, and the moving device 230 is a movable device capable of moving the image capture device 220 to a specified position, such as a car, a flying object and so on. In some embodiments, the moving device 230 may also be integrated with the image capture device 220.

The communication device 210 is similar to the communication device 110. Specifically, the communication device 210 is configured to perform wired or wireless transmission and reception to and from the communication device 110 via the communication link 300 (e.g., Wi-Fi or Bluetooth network).

The image capture device 220 may be one or more optical sensors configured to capture images. For example, the image capture device 220 may be a camera with one or more CCD or CMOS sensors, but the application is not limited thereto. The image capture device 220 further includes one or more lens module 222, which are optical systems directed to an object and condenses the light from the object on an imaging element (not shown) in the image capture device 220. The position of the lens module 222 can further be changed to perform a digital zoom-in or zoom-out function even if the position of the image capture device 220 is fixed.

In one embodiment, the controlling device 100 can be a handheld device (e.g., a mobile phone) that has a touch screen and a wireless transceiver for providing wireless communication between the controlling device 100 and the apparatus 200, and the apparatus 200 can be a flying object equipped with a camera and a wireless transceiver (e.g., a drone or a Unmanned Aerial Vehicle (UAL)) for capturing still or video images that are wirelessly transmitted to and displayed on the touch screen of the handheld device. In another embodiment, the controlling device 100 can be a mobile device with a camera and a touch screen, the image capture device 220 can be the camera of the mobile device and the moving device 230 can be a lens module of the camera of the mobile device, and the application is not limited thereto.

It should be noted that each of the above identified applications correspond to a set of instructions for performing one or more of the functions described above. Various functions of the controlling device 100 may be implemented in software and/or in hardware, including one or more signal processing and/or application specific integrated circuits. It should also be understood that the components described in the embodiment of Fig. 1 are for illustrative purposes only and are not intended to limit the scope of the application.

To be more specific, the controlling device 100 is configured to display a preview image provided by the image capture device 220 on a display device 140 of the controlling device 100, detect inputs from the input device 150 to alter the preview image on the display device 140, obtain a first image to be captured based on the detected inputs, generate one or more first control commands according to the first image, and transmit the one or more first control commands to the apparatus 200 via the communication link 300 to control the image capture device 220 and the moving device 230 to capture a second image to be returned to the controlling device 100. The first image is associated with the altered preview image and the second image returned is ideally the same as the first image.

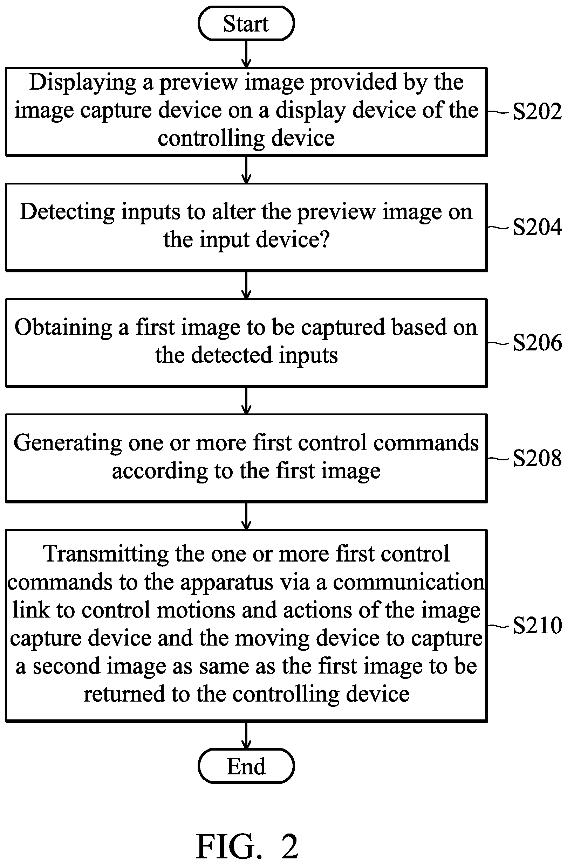

Fig. 2 is a flow chart of a method for controlling motions and actions of an apparatus using a controlling device according to an embodiment of the application. The method may be performed by the controlling system 1 in Fig. 1, for example. The controlling system 1 of Fig. 1 is utilized here for explanation of the flow chart, which however, is not limited to be applied to the controlling system 1 only.

In step S202, when the operator 10 wishes to photograph an image, a preview image provided by the image capture device 220 (e.g., a camera) is displayed on a display device 140 of the controlling device 100 for checking by the operator 10. The step S202 may be performed by the controller 120 in Fig. 1, for example. To be more specific, in some embodiments, the operator 10 may direct the apparatus 200 toward the operator himself and photographs the operator himself. In this case, the operator becomes an object to be captured, which is also known as a selfie mode. In some embodiments, the operator 10 may direct the apparatus 200 to capture an image with an object other than the operator himself. Particularly, when a photographing request is received, the controller 120 may activate the image capture device 220 via the communication device 110 to capture an image and the captured image is returned to the controlling device 100 via the communication device 210 as the preview image to be displayed on the display device 140 for viewing by the operator 10. An image with an object 22 in a scene 20 in front of the image capture device 220 will be captured by the image capture device 220 and transmitted back to the controlling device 100 as the preview image. The size of the scene 20 may be determined based on the field of view (FOV) range of the image capture device 220, for example. The lager the FOV range of the image capture device 220 is, the larger the size of the scene 20 becomes. The FOV range of the image capture device 220 can be changed according to movement of the image capture device 220.

The operator 10 may then wish to alter the preview image displayed on the display device 140. By indication or gesture via the input device 150, the operator can construct an image composition of a first image to be captured while altering the preview image on the display device 140.

When the operator 10 alters the preview image, in step S204, inputs to alter the preview image are detected from the input device 150. The step S204 may be performed by the controller 120 in Fig. 1, for example. In some embodiments, when the input device 150 is a touchable user interface, the operator can alter the preview image via finger gesture through contact with the touchable user interface. For example, the operator may set a frame of desired photo composition to change image composition of the preview image by sketching a region on the preview image or touching two points of the preview image using their fingers via the input device 150. In other embodiments, when the input device 150 is a non-touchable user interface, the operator 10 can also alter the preview image via the input device 150 (e.g. buttons or keypads) provided by the non-touchable user interface.

After inputs to alter the preview image are detected, in step S206, a first image to be captured is obtained based on the detected inputs, wherein the first image is associated with the altered preview image. The step S206 may be performed by the controller 120 in Fig. 1, for example. The controller 120 may generate or obtain a first image at which the position of the object 22 in the displayed preview image is shifted according to the detected inputs corresponding to the object 22. In other words, the image composition of the first image may be different from that of the preview image.

After the first image is obtained, in step S208, one or more first control commands are generated according to the first image. The step S208 may be performed by the controller 120 in Fig. 1, for example.

Specifically, the controller 120 can generate one or more control commands which are provided to move or direct the motion and action of the moving device 230 and the image capture device 220 in the apparatus 200. For example, in an embodiment where the controlling device 100 is a handheld device (e.g., a mobile phone) that has a touch screen and the moving device 230 is a flying object, a control command may be used to pilot the flying object along at least one of roll, yaw and pitch axial rotations combined with at least one of forward, backward, leftward and rightward panmovements to control the flight orientation of the flying object. In the aforementioned embodiment, in a case where the flying object is equipped with the image capture device (e.g., a camera), another control command may also be provided to activate zoom-in/out function of the image capture device by pinch/de-pinch touch gestures on the touch screen of the handheld device when the flying object is attached with the camera to implement image-capturing (e.g. still images or moving/video images) and zoom-in/out functions.

Thereafter, in step S210, the one or more first control commands are transmitted to the apparatus 200 via a communication link 300 to control motions and actions of the image capture device 220 and the moving device 230 to capture a second image to be returned to the controlling device 100, wherein the second image returned is ideally the same as the first image. The step S210 may be performed by the controller 120 in Fig. 1, for example. That is, the second image returned has an image composition as same as that of the first image.

To be more specific, the controlling of the motions and actions of the image capture device and the moving device may comprise one or more of following motions and/or actions: controlling the moving device 230 to change a position of the image capture device 220, rotating the image capture device 220 and enabling zoom-in and zoom-out operation on the image capture device 220.

For example, the operator 10 may input one or more finger gestures or predefined gestures with the preview image to alter the preview image to make a first image to be captured on an input device 150 of the controlling device 100, and thus the controller 120 may then detect those inputs (e.g., the finger gesture or operation), and then generate control commands according to the detected inputs and transmitted the control commands to the apparatus 200 via the communication device 110. To be more specific, the controller 120 may further include software to receive the operator's touch gestures and applies the algorithm for transferring motion and action of the image capture device 220 and/or the moving device 230 from photo composition preference input by the operator 10 to generate the control commands.

In yet another embodiment, the display device 140 may be a touch-sensitive screen that may comprise a touch-sensitive module capable of detecting user inputs (e.g. touch actions) on the display device 140, and the preview image can be altered manually. For example, when the image capture function is enabled, the controller 120 may first transmit a control command to the apparatus 200 to activate the image capture device 220 to capture an image including an object 22 (e.g., the operator or an object other than the operator) in a scene 20 at current position and then display the image captured by the image capture device 220 as a preview image on the display device 140. The operator 10 may first check the preview image and then use his/her finger or a stylus to select and decide a desired image composition via the input device 150, such as sketching a region or touching two points on the display device 140, and thus the controller 120 may detect one or more inputs via the input device 150. Then, the controller 120 may generate respective control commands in response to the detected user input and control the control motions and actions of the image capture device 220 and the moving device 230 accordingly.

For example, when the detected inputs comprise a rotation gesture, a rotation command is generated according to the rotation gesture. The rotation command may comprise rotation information for indicating how to rotate the image capture device 220, such as a rotation angle and/or rotation direction. When receiving the rotation command from the controlling device 100, the moving device 230 or the image capture device 220 may rotate the image capture device 220 according to rotation information included in the rotation command. For example, the image capture device 220 may be rotated 180 degree if the rotation command indicates a rotation angle of 180 degree.

When the detected inputs comprise a pan gesture, a pan command is generated according to the pan gesture. The pan command may contain pan information to instruct the moving device 230 how to move the image capture device 220, such as the moving distance and/or moving direction. When receiving the pan command from the controlling device 100, the moving device 230 may move the image capture device 220 to the target position toward the moving direction according to the pan command.

When the detected inputs comprise a scaling gesture, a scaling command is generated according to the scaling gesture. The scaling command may instruct how the moving device 230 should move the image capture device 220 (e.g., close to or away from the object 22) and indicate whether a zoom-in or zoom-out operation should be performed by the image capture device 220. When receiving the scaling command from the controlling device 220, the moving device 230 may move the image capture device 220 to the target position and the image capture device 220 may perform corresponding zoom-in or zoom-out operation if needed according to the scaling command.

For example, when the moving device 230 is a drone and the image capture device 220 is a camera associated with the drone, the operator 10 may change the preview image to input the preferred photo composition on the display device 140 of the controlling device 100, then the controlling device 100 generates control commands based on the detected inputs to control motions and/or actions of the drone to enabling the drone and camera to automatically move to a proper position with proper camera zooming so as to capture the image. In one embodiment, the step of automatically move to a proper position can be achieved by piloting the flying object along at least one of roll, yaw and pitch axial rotations combined with at least one of forward, backward, leftward and rightward pan movements using the control commands.

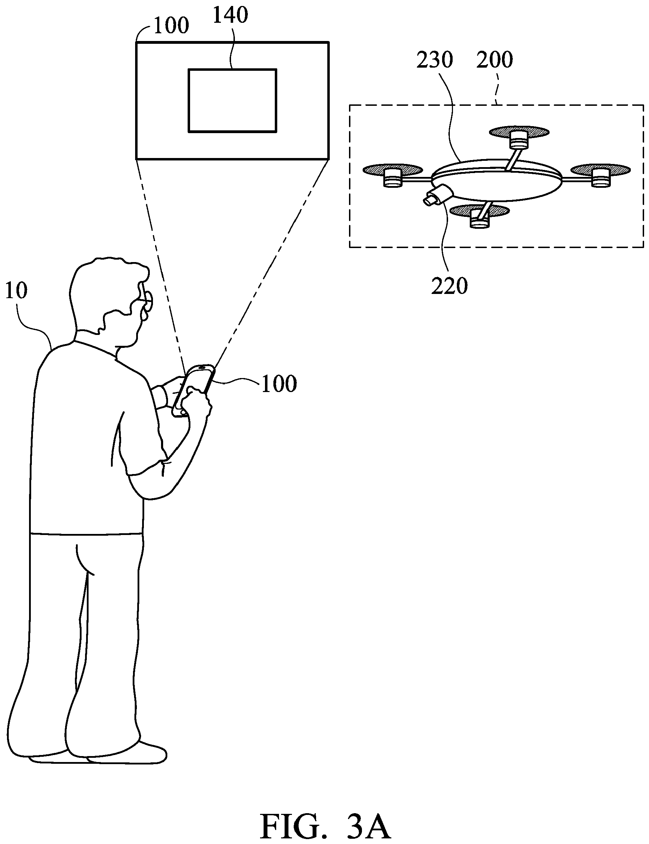

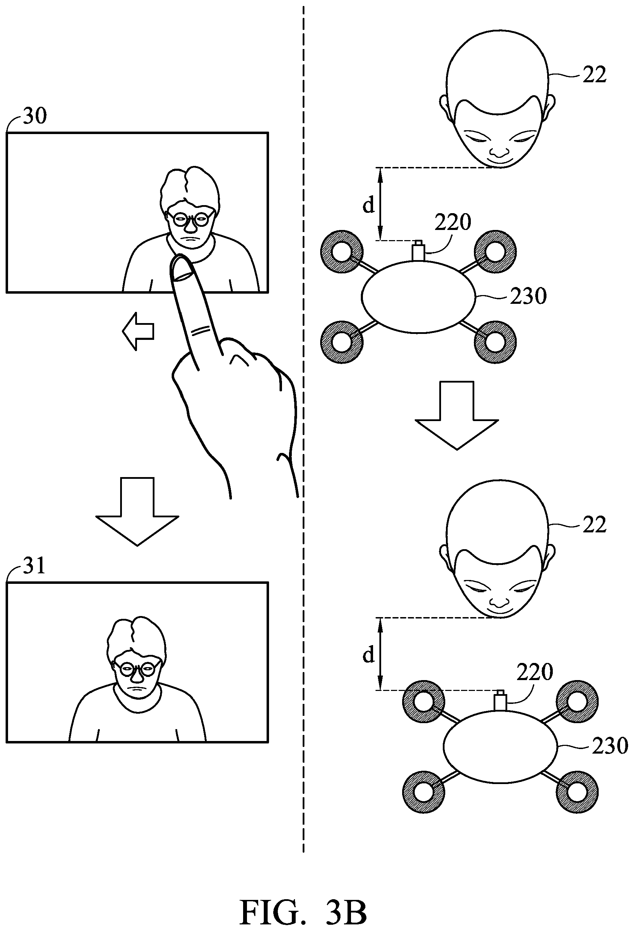

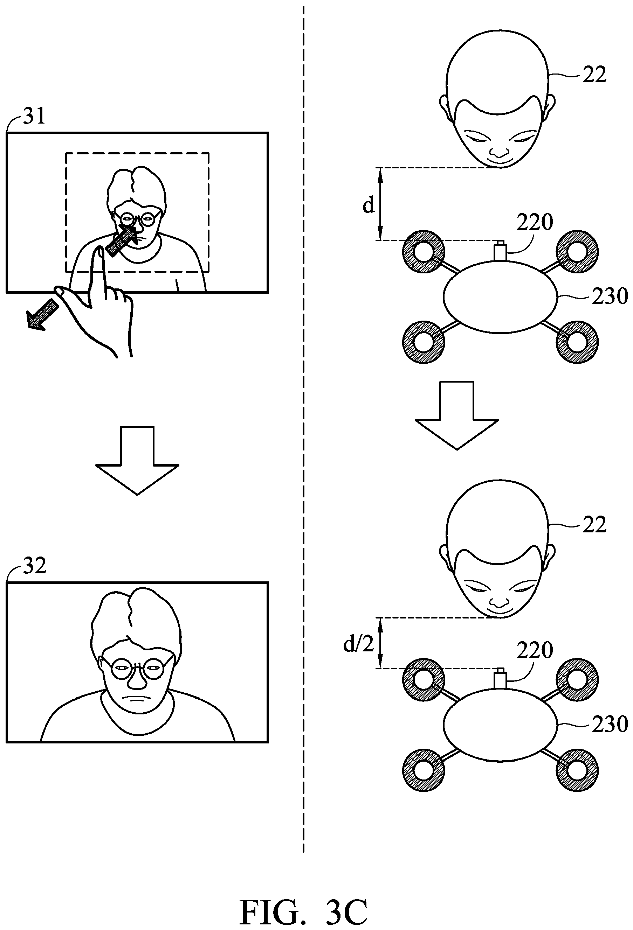

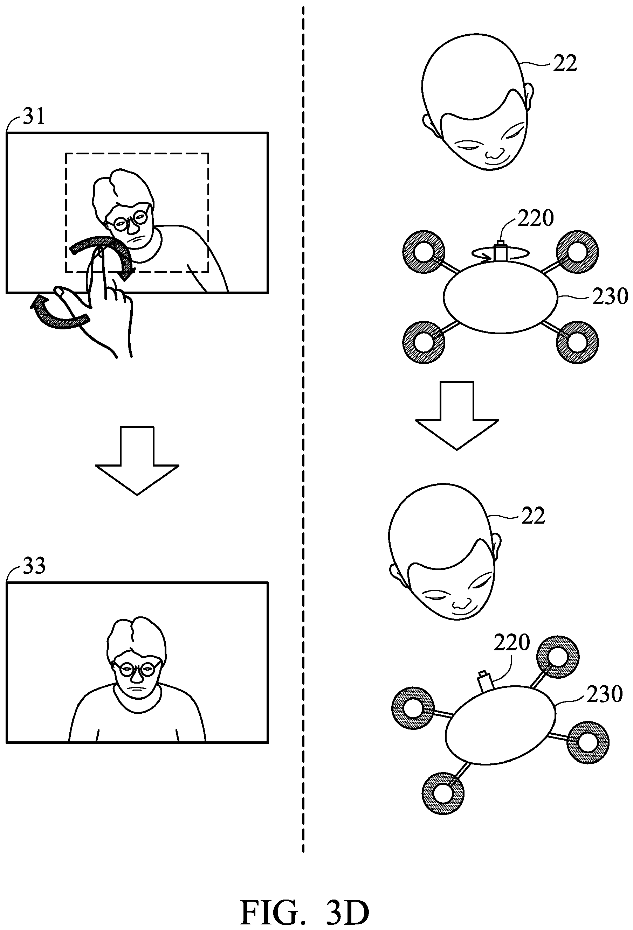

For example, please refer to Figs. 3A-3D. Figs. 3A to 3D are schematic diagrams illustrating an embodiment of an example of an operation for altering the preview image on the display device 140 and related motion and action control of the image capture device and the moving device within the apparatus of the application, wherein Fig. 3A illustrates an exemplary embodiment of the controlling system and Figs. 3B, 3C and 3D illustrates related motion and action control of the image capture device and the moving device corresponding to inputs of pan gesture, scaling gesture and rotation gesture, respectively. For explanation, the controlling system of Fig. 3A is applied to Figs. 3B to 3D as examples in this embodiment, and those skilled in the art will understand that the present application is not limited thereto. Further, in each of the Figs. 3B to 3D, the left half portion shows a change in the preview image displayed on the display device and the right half portion shows related motion and action of the image capture device and the moving device in a real scene.

As shown in Fig. 3A, an exemplary embodiment of the controlling system 1 is illustrated, wherein the controlling device 100 is a mobile phone and the apparatus 200 comprises a flying object (e.g., a drone) and a camera. The moving device 230 is the flying object and the image capture device 220 is the camera associated with the flying object. In this embodiment, the operator 10 is using the mobile phone to perform a selfie operation. The controlling device 100 includes a display device 140 which further provides a touchable user interface for interacting with the operator 10. As shown in the right portion of Fig. 3B, as the object is the operator himself and the position of the camera is not aligned with the position of the operator, a preview image 30 is shown in the upper left portion of Fig. 3B. In the preview image 30, the object 22 is located at right side of the preview image. Then, the operator 10 may wish to move the object 22 to the center of the preview image and thus he slides left by his fingers (e.g., tap the object and move to left) to input a pan gesture on the touch screen. When detecting an input of the pan gesture, the controller of the controlling device 100 generates a pan command according to the pan gesture to the apparatus 200. When receiving the pan command from the controlling device 100, the moving device 230 moves the image capture device 220 to a target position to align with the position of the operator according to the pan command as shown in lower right portion of Fig. 3B. Another image is captured by the image capture device 220 at the target position and returned to the controlling device as a second image 31 as shown in the lower left portion of Fig. 3B. In the second image 31, the object 22 is located at the center region of the preview image as the operator desired.

Similarly, as shown in the upper left portion of Fig. 3C, the operator may further wish to perform zooming with the object 22 and thus he may input a scaling gesture on the touch screen. A distance between the object 22 and the image capture device 220 is d. When detecting an input of the scaling gesture, the controller of the controlling device 100 generates a scaling command according to the scaling gesture to the apparatus 200. When receiving the scaling command from the controlling device 100, the moving device 230 may move the image capture device 220 to near the object 22 according to the scaling command as shown in lower right portion of Fig. 3C. The distance between the object 22 and the image capture device 220 becomes d/2, for example. Another image is captured by the image capture device 220 at this position and returned to the controlling device 100 as a second image 32 as shown in the lower left portion of Fig. 3C. In this case, the lens module 222 of the image capture device 220 may further be controlled to perform corresponding zoom-in or zoom-out operation if needed according to the scaling command.

As shown in Fig. 3D, the operator may further input a rotation gesture on the input device 150. When detecting an input of the rotation gesture, the controller of the controlling device 100 generates a rotation command according to the rotation gesture to the apparatus 200. When receiving the rotation command from the controlling device 100, the image capture device 220 is rotated according to the rotation command as shown in right half portion of Fig. 3D. Another image is captured by the image capture device 220 at this position and returned to the controlling device as a second image 33 as shown in the lower left portion of Fig. 3D.

As another exemplary implementation of the embodiment, the controller displays the second image as the preview image on the display device 140 upon receiving the returned second image and may further detect inputs to alter the second image on the user interface. A third image to be captured is obtained based on the detected inputs, wherein the third image is associated with the altered second image. One or more second control commands are generated according to the third image. Similarly. The one or more second control commands are then transmitted to the apparatus 200 via the communication link 300 to control the movements and actions of the image capture device and the moving device to capture a fourth image and the fourth image captured is returned to the controlling device. The fourth image returned will be the same as the third image.

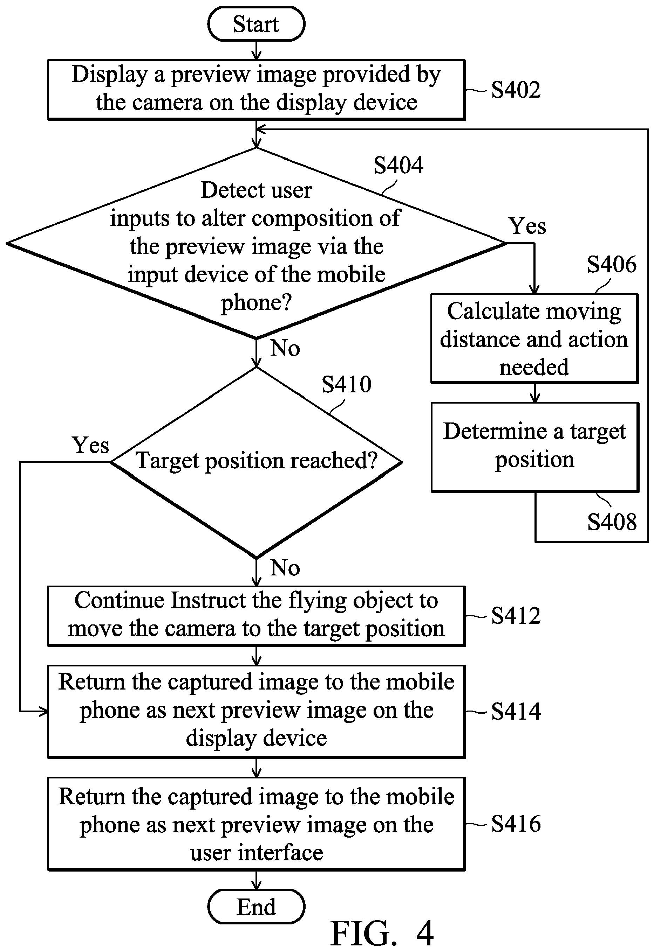

Fig. 4 is a flow chart of a method for controlling motions and actions of an apparatus using a controlling device according to another embodiment of the application. The method may be performed by the controlling system 1 in Fig. 1, for example. The controlling system 1 of Fig. 3 is utilized here for explanation of the flow chart, which however, is not limited thereto. In this embodiment, the apparatus 200 is a flying object equipped with a camera and the controlling device 100 is a mobile phone for explanation purpose.

In step S402, the mobile device displays a preview image provided by the camera on the display device. Then, in step S404, the mobile device further determines whether the user inputs to alter composition of the preview image can be detected via the input device of the mobile phone. If so (Yes in step S404), which means the composition of the preview image is changed, the mobile device calculates moving distance and action needed (step S406) and determine or reassign a target position for the camera based on the calculation result (step S408). Then, the flow backs to step S404 to continuously determine whether there are user inputs detected and recalculate a target position for the camera if needed.

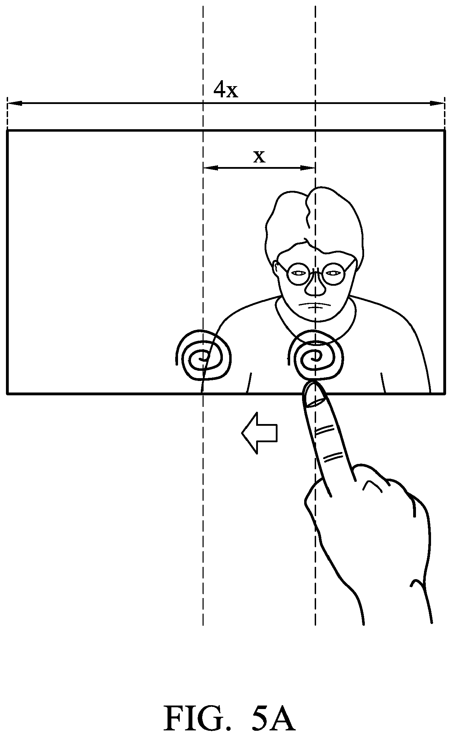

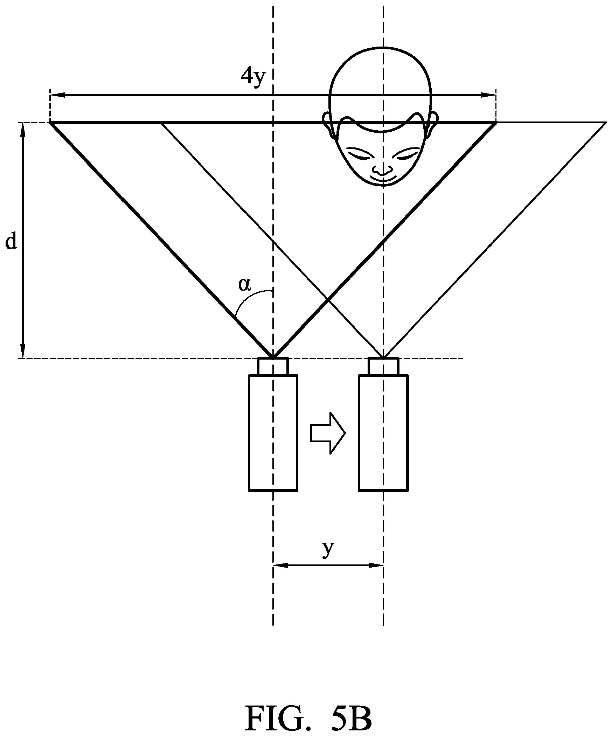

Figs. 5A and 5B are schematic diagrams illustrating an embodiment of an example of calculating moving distance and action needed of the application. As shown in Fig. 5A, it is assumed that a drag distance x on the touch screen is detected for altering the preview image displayed on the touch screen and a distance between the camera and the object in real scene is d. Then, a moving distance y of the camera can be calculated by following formula: y = 2*d*tan(a), wherein a is an included angle corresponding the FOV of the camera as shown in Fig. 5B. It should be understood that the formula for moving distance calculation is utilized here for explanation of the flow chart, which however, is not limited thereto. For one having ordinary skill in the art, it is appreciated that various formulas or methods can be applied to the moving distance calculation, and the application is not limited to this formula.

If it is determined that no user inputs to alter composition of the preview image are detected (No in step S404), the mobile device may generate one or more control commands and send them to the apparatus 200. The apparatus 200 then determines whether the target position for the camera is reached (step S410). If not, the apparatus 200 continuously instruct the flying object to move the camera to the target position until the target position is reached (step S412). If the target position is reached, the camera captures an image at the target position (step S414). After the image is captured, the apparatus 200 returns the captured image to the mobile phone and the mobile phone displays the captured image as next preview image (i.e., the second image) on the display device (step S416).

In some embodiments, when the apparatus 200 captures the second image and prepares to return to the controlling device 100, as the returning is based on the network, there may be a transmission delay between the controlling device 100 and the apparatus 200. In order to improve transmission delay between the controlling device 100 and the apparatus 200 during transmitting the captured image, some implementations for improving transmission delay are further provided.

In an exemplary implementation of the embodiment, the transmission delay between the controlling device 100 and the apparatus 200 can be reduced by partially displaying of the captured image as the preview image on the display device according to the detected inputs to provide instantly response to the user. A first cropped region of the second image is displayed as the preview image when receiving the second image. Then, when detecting inputs from the input device, a second cropped region of the second image is determined and the second cropped region of the second image is displayed as the preview image.

For example, the controlling device 100 may request the apparatus 200 to capture an image with a resolution larger than the display area of the display device. Then, the controlling device 100 may display partial of the captured image as the preview image on the display device (e.g., only the center region of the captured image is displayed). When a drag left gesture is detected (e.g. by sliding to left gesture), the displayed region is shifted to right accordingly to select a second cropped region of the second image to display as the preview image. As only partial of the captured image is displayed as the preview image, there is no need to transmit the whole frame again.

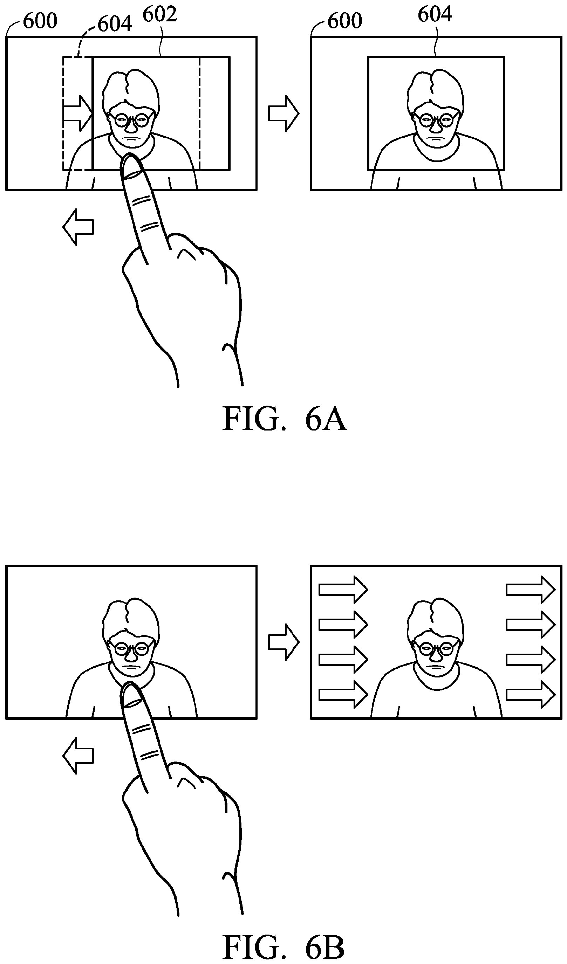

Fig. 6A is a schematic diagram illustrating an embodiment of an example of an operation for improving the transmission delay of the application. As shown in Fig. 6A, assuming the resolution of the second image 600 captured is larger than that of display area of the user interface on which the preview image is displayed. When receiving the second image 600, the controller 120 may further determine a first cropped region 602 of the second image 600 and display it as the preview image. Then, when detecting inputs from the display device, the controller 120 may select a second cropped region 604 of the second image 600 and displays it according to the detected inputs. The controller 120 may adjust the position of cropped region within the second image according to the detected inputs and then display the cropped region of the second image as the preview image on the display device for viewing by the operator.

In yet another embodiment, in order to move smoothly, when obtaining a first moving distance on the display device according to the detected inputs, the controller 120 may further generate a control command indicating a second moving distance to move the image capture device 220 based on the determined first moving distance. The first moving distance can be a plurality of times of the second moving distance. For example, the first moving distance can be five times of the second moving distance.

In another exemplary implementation of the embodiment, the transmission delay between the controlling device 100 and the apparatus 200 can also be reduced by processing the second image with an image compression or interpolation to improve the user experience.

To be more specific, a low resolution version of the second image is first transmitted from the apparatus 200 to the controlling device 100. The low resolution version of the second image is displayed as the preview image on the display device. A full resolution version of the second image is then transmitted from the apparatus 200 to the controlling device 100. Finally, the full resolution version of the second image is displayed as the preview image on the display device.

In this embodiment, a full resolution version of the second image is compressed by the apparatus 200 to generate a low resolution version of the second image. For example, if a full version of the second image is of a resolution of 1024*768, a low resolution version of which can be the second image of a resolution of 320*240.

When the controlling device 100 receives the low resolution version of the second image, the low resolution version of the second image is displayed as the preview image on the display device for viewing by the operator. As the low resolution image requires less network bandwidth in transmission than the full resolution image, the operator in the controlling device can quickly preview the second image to avoid transmission delay. The full resolution version of the second image is then transmitted from the apparatus 200 to the controlling device 100. The full resolution version of the second image is displayed as the preview image on the display device. By such progressive transmission, i.e., low resolution image is shown first and full resolution image is shown later, the transmission delay between the controlling device 100 and the apparatus 200 can be reduced.

In another embodiment, the transmission delay between the controlling device 100 and the apparatus 200 can also be reduced by displaying an indicator on the display device according to the detected inputs to provide instantly response to the user prior to receiving the second image returned by the apparatus. For example, prior to receiving the second image from the apparatus, the controlling device may display an indicator such as an arrow toward right on the preview image displayed on the display device to provide instantly response to the user when the user's finger is moved to the left, as shown in Fig. 6B. In addition, during the transition from one to another preview image, the image can be blurred until the captured image is received. For one having ordinary skill in the art, it is appreciated that various indicators or image effects can be illustrated prior to receiving the second image returned by the apparatus, and the application is not limited to the aforementioned image effects.

In another embodiment, when the apparatus 200 is associated with a display device (not shown), instruction information which instructs how to move the image capture device to obtain the second image can be further displayed on the display device of the apparatus. Specifically, in this embodiment, the control commands may further be converted to instruction information which instructs how to move the image capture device to obtain the second image so that the user of the apparatus may move the image capture device manually to obtain the second image by following the instruction information. For example, the instruction information may display information of "Please shift the apparatus to the right about XX cm" to indicate that the apparatus needs to be moved to the right with a given distance and thus the user of the apparatus may serve as the moving device to move the apparatus accordingly.

In yet another exemplary implementation, the controller 120 may determine a target position for the image capture device 200 based on the first image and use the first control commands to control the moving device 230 to move the image capture device 220 to the target position. When the moving of the moving device 230 is stopped (e.g., due to a control distance limitation or obstacle avoidance) and the image capture device 200 is not moved to the target position, the image capture device 220 further performs, by using the lens module 222, an optical zooming operation to move to the target position and/or performs a digital zooming operation to move to the target position when the image capture device is still not moved to the target position after the optical zooming operation has been performed.

In yet another exemplary implementation, the image capture device 220 and the controller 120 may further be integrated into an apparatus. In this embodiment, the controller 120 is coupled to the image capture device 220, wherein the controller 120 is configured to display a preview image provided by the image capture device 220 on a display device of the apparatus, detect inputs to alter the preview image from an input device of the apparatus, obtain a first image to be captured based on the detected inputs, generate one or more first control commands according to the first image and use the one or more first control commands to control motions and actions of the lens module 222 of the image capture device 220 to set its position to capture a second image to be displayed on the display device as next preview image.

In view of the above implementations, a method for controlling motions and actions of an apparatus including an image capture device having a moving device connected thereto using a controlling device and an associated controlling system are provided. The method of the present application can provide image composition for an operator to alter the preview image at the controlling device side and automatically transfer input information from the operator to motion/action of the moving device and the image capture device to capture a desired scene in a very intuitive way without needing specific operation skill to be performed by the operator, thus providing a better user experience.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms. For example, implementation can be accomplished via a hardware apparatus or a hardware and software apparatus. An apparatus may be implemented in, for example, appropriate hardware, software, and firmware. The methods may be implemented in an apparatus such as, for example, a processor, which refers to any processing device, including, for example, a computer, a microprocessor, an integrated circuit, or a programmable logic device.

While the disclosure has been described by way of example and in terms of the preferred embodiments, it is to be understood that the disclosure is not limited to the disclosed embodiments. On the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A method for controlling motions and actions of an apparatus including an image capture device having a moving device connected thereto using a controlling device, wherein the moving device is capable of moving the image capture device, the method comprising:
displaying a preview image provided by the image capture device on a display device of the controlling device;
detecting inputs to alter the preview image from an input device of the controlling device on a user interface;
obtaining a first image to be captured based on the detected inputs, wherein the first image is associated with the altered preview image;
generating one or more first control commands according to the first image; and
transmitting the one or more first control commands to the apparatus via a communication link to control motions and actions of the image capture device and the moving device to capture a second image to be returned to the controlling device;
wherein the second image returned is the same as the first image.

2. The method of claim 1, further comprising:
displaying the second image as the preview image on the display device when receiving the second image;
detecting inputs to alter the second image from the input device;
obtaining a third image to be captured based on the detected inputs, wherein the third image is associated with the altered second image;
generating one or more second control commands according to the third image; and
transmitting the one or more second control commands to the apparatus via the communication link to control the movements and actions of the image capture device and the moving device to capture a fourth image to be returned to the controlling device;
wherein the fourth image returned is the same as the third image.

3. The method of claim 1 or 2, wherein the controlling of the motions and actions of the image capture device and the moving device comprises at least one of controlling the moving device to change a position of the image capture device, rotating the image capture device and enabling zoom-in and zoom-out operation on the image capture device.

4. The method of any one of claims 1 to 3, further comprising:
displaying a first cropped region of the second image as the preview image on the display device when receiving the second image; and
when detecting inputs from the input device, determining a second cropped region of the second image based on the detected inputs and displaying the second cropped region of the second image as the preview image.

5. The method of any one of the preceding claims, wherein during returning the second image captured by the image capture device of the apparatus, the method further comprises:
transmitting a low resolution version of the second image from the apparatus to the controlling device;
displaying the low resolution version of the second image as the preview image on the display device;
transmitting a full resolution version of the second image from the apparatus to the controlling device of the controlling device; and
displaying the full resolution version of the second image as the preview image on the display device of the controlling device.

6. The method of any one of the preceding claims, wherein generating the one or more first control commands according to the first image further comprising:
obtaining a first moving distance on the display device according to the detected inputs;
determining a second moving distance to move the image capture device based on the obtained first moving distance; and
generating the one or more first control commands to move the image capture device according to the second moving distance;,
wherein the length of the first moving distance is a plurality of times of the length of the second moving distance.

7. The method of any one of the preceding claims, further comprising:
prior to receiving the second image from the apparatus, generating an indicator on the preview image displayed on the display device according to the detected inputs.

8. The method of any one of the preceding claims, further comprising:
determining a target position for the image capture device based on the first image; and
using the first control commands to control the moving device to move the image capture device to the target position;
wherein when the moving of the moving device is stopped and the image capture device is not moved to the target position, the image capture device further performs an optical zooming operation to move to the target position and performs a digital zooming operation to move to the target position when the image capture device is still not moved to the target position after the optical zooming operation has been performed.

9. The method of any one of the preceding claims, when the apparatus is equipped with a display device, and the method further comprises:
displaying instruction information which instructs how to manually move the image capture device to obtain the second image on the display device of the apparatus.

10. A controlling system, comprising:
an apparatus including an image capture device having a moving device connected thereto, wherein the moving device is capable of moving the image capture device that captures images;
a controlling device coupled to the apparatus via a communication link for controlling motions and actions of the image capture device and the moving device in the apparatus,
wherein the controlling device is configured to display a preview image provided by the image capture device on a display device of the controlling device, detect inputs to alter the preview image from an input device, obtain a first image to be captured based on the detected inputs, generate one or more first control commands according to the first image, and transmit the one or more first control commands to the apparatus via the communication link to control the image capture device and the moving device to capture a second image to be returned to the controlling device;
wherein the first image is associated with the altered first image and the second image returned is the same as same as the first image.

11. The controlling system of claim 10, wherein the controlling device is further configured to display the second image as the preview image on the display device when receiving the second image, detect inputs to alter the second image from the input device, obtain a third image to be captured based on the detected inputs, wherein the third image is associated with the altered second image, generate one or more second control commands according to the third image, and transmit the one or more second control commands to the apparatus via the communication link to control the motions and actions of the image capture device and the moving device to capture a fourth image to be returned to the controlling device; wherein the fourth image returned is the same as the third image.

12. The controlling system of claim 10 or 11, wherein the controlling of the motions and actions of the image capture device and the moving device comprises at least one of controlling the moving device to change a position of the image capture device, rotating the image capture device and enabling zoom-in and zoom-out operation on the image capture device.

13. The controlling system of any one of claims 10 to 12, wherein the controlling device is further configured to display a first cropped region of the second image as the preview image on the display device when receiving the second image and when detecting inputs from the input device, determine a second cropped region of the second image based on the detected inputs and displaying the second cropped region of the second image as the preview image.

14. The controlling system of any one of claims 10 to 13, wherein during returning the second image captured by the image capture device of the apparatus, the apparatus is further configured to transmit a low resolution version of the second image to the controlling device and the controlling device is further configured to display the low resolution version of the second image as the preview image on the display device upon receiving the low resolution version of the second image; and the apparatus is further configured to transmit a full resolution version of the second image to the controlling device and the controlling device is further configured to display the full resolution version of the second image as the preview image on the display device of the controlling device.

15. The controlling system of any one of claims 10 to 14, wherein the controlling device is further configured to generate the one or more first control commands according to the first image by obtaining a first moving distance on the display device according to the detected inputs; determining a second moving distance to move the image capture device based on the obtained first moving distance; and generating the one or more first control commands to move the image capture device according to the second moving distance; wherein the length of the first moving distance is a plurality of times of the length of the second moving distance.

16. The controlling system of any one of claims 10 to 15, wherein prior to receiving the second image from the apparatus, the controlling device is further configured to generate an indicator on the preview image displayed on the display device according to the detected inputs.

17. The controlling system of any one of claims 10 to 16, wherein the controlling device is further configured to use the first control commands to control the moving device to move the image capture device to the target position, wherein when the moving of the moving device is stopped and the image capture device is not moved to the target position, the image capture device further performs an optical zooming operation to move to the target position and performs a digital zooming operation to move to the target position when the image capture device is still not moved to the target position after the optical zooming operation has been performed.
